(19) Europäisches Patentamt
European Patent Office
Office européen des brevets

(11) **EP 1 752 738 A1**

(12) **EUROPEAN PATENT APPLICATION**
published in accordance with Art. 158(3) EPC

(43) Date of publication:
**14.02.2007 Bulletin 2007/07**

(51) Int Cl.:
*G01C 21/34* (2006.01)    *G08G 1/0969* (2006.01)

(21) Application number: **05734117.4**

(86) International application number:
**PCT/JP2005/007825**

(22) Date of filing: **25.04.2005**

(87) International publication number:
**WO 2005/108928 (17.11.2005 Gazette 2005/46)**

(84) Designated Contracting States:
**DE FR GB**

(30) Priority: **07.05.2004 JP 2004138718**

(71) Applicant: **Pioneer Corporation**
**Tokyo 153-8654 (JP)**

(72) Inventors:
• **NAMBATA, Ippei,**
**c/o Pioneer Corporation**
**Kawagoe-shi, Saitama 3508555 (JP)**

• **HIROSE, Chihiro,**
**c/o Pioneer Corporation**
**Kawagoe-shi, Saitama 3508555 (JP)**

(74) Representative: **von den Steinen, Axel**
**Böck, Tappe, v.d. Steinen,**
**Weigand**
**Patent- und Rechtsanwälte**
**Kantstraße 40**
**D-97074 Würzburg (DE)**

(54) **ROUTE SEARCH DEVICE, ROUTE SEARCH METHOD, ROUTE SEARCH PROCESSING PROGRAM, ETC.**

(57)    The present invention provides a route searching device that can detect an optimum route with higher precision, a route searching method, and a route searching program.

The route searching device detects an optimum route among possible routes from a first point to a second point, on the basis of link costs that are set for a plurality of links constituting the possible routes. The route searching device makes at least one of a determination on whether there is a restricting element for restricting the movement of a movable body at the time of moving from the road corresponding to one link to the road corresponding to another link via the connecting portion corresponding to a node to which at least two links are connected, a determination on the number of links connected to the node, a determination on the shape formed with the roads corresponding to the links connected to the connecting portion corresponding to the node, a determination on attributes of at least one of the roads corresponding to the links connected to the node, and a determination on the conditions of the roads. The route searching device then acquires a node cost that represents the difficulty of the movement from the road corresponding to the one link to the road corresponding to the another link, the node cost being in accordance with one or a combination of two or more of factors including the existence of a restricting element , the number of connected links, the shape formed with the roads corresponding to the links, the attributes of the roads, and the conditions of the roads, the factors being on the basis of the determination results of the determining means. On the basis of the link cost and the acquired node cost, the route searching device searches for the optimum route.

**(Cont. next page)**

EP 1 752 738 A1

# FIG. 1

<u>S</u>

**SYSTEM CONTROL UNIT** — 8

| | |
|---|---|
| GPS RECEIVING UNIT — 1 | |
| SENSOR UNIT — 2 | |
| TRAFFIC INFORMATION RECEIVING UNIT — 3 | |

**System control unit blocks:**
- PRESENT LOCATION CALCULATING UNIT — 8a
- LINK COST CALCULATING UNIT — 8b
- LINK LEARNING LEVEL SETTING UNIT — 8c
- NODE COST CALCULATING UNIT — 8d
- NODE LEARNING LEVEL SETTING UNIT — 8e
- ROUTE SEARCHING UNIT — 8f
- ROUTE GUIDING UNIT — 8g

- INFORMATION MEMORY UNIT — 4
- DISPLAY UNIT — 5
- AUDIO OUTPUT UNIT — 6

OPERATING UNIT — 7

**Description**

Field of the Invention

The present invention relates to the technical field of route searching devices and methods for detecting an optimum route from possible routes to travel from a first point to a second point, on the basis of link costs that are set for the each links constituting the possible routes.

Prior Art

In a conventional route searching device of this type, a total link cost is calculated by adding up the link costs (Assigning of the weights determined in accordance with factors such as the length of the road corresponding to each link and the road attributes (such as the road width)) set for the possible routes to travel from a departure point or the present location to a destination. The possible route having the smallest total link cost is determined to be the optimum route.

In a navigation apparatus disclosed in Patent Document 1, the node cost of each node that connects links is also taken into consideration, and the total cost is the sum of the total link cost and the total node cost. The node cost of each node can be determined by a turn. In a case of a right turn, the node cost is increased, because it is difficult to make a right turn.

In a navigation apparatus disclosed in Patent Document 2, the travel frequency of the traveling road (the number of times the road has been run) is also taken into consideration, and the link cost of the link corresponding to the traveling road is varied accordingly (by a so-called learning function).

With such a navigation apparatus disclosed in either Patent Document 1 or Patent Document 2, a route that is closer to the route requested by the driver can be detected.

Patent Document 1: Japanese Patent Application Laid-Open No. 2000-329574
Patent Document 2: Japanese Patent Application Laid-Open No. 2003-57054

Disclosure of the Invention

Problems to be Solved by the Invention

However, in a case where a vehicle moves (runs straight ahead or makes a left or right turn) from the road corresponding to a link to the road corresponding to another link via the intersection corresponding to a node, for example, the difficulty of the move is varied not only by a right turn but also by the widths of the roads, the existence of a signal light, the existence of a right-turn lane or a left-turn lane, the shape formed with the roads (a T-shaped junction, a right angle crossroad, or the like), the traffic conditions (such as the congestion levels) of the roads, and the like. In the conventional navigation apparatus disclosed in Patent Document 1, those factors are not taken into consideration. Therefore, the navigation apparatus has limitations in detecting an optimum route that is the closest possible to the desired one.

Furthermore, in a case where each link cost in the conventional navigation apparatus disclosed in Patent Document 1 is varied with the travel frequency as disclosed in Patent Document 2, a problem in relation to the node costs that do not vary with the travel frequency might be caused.

In an exemplary case where two different routes have the same departure point and the same destination, and one (route A) of the two routes has a total cost of "1400" ("1000" in total link cost and "400" in total node cost) while the other one (route B) has a total cost of "1600" ("1500" in total link cost and "100" in total node cost) (the route A being the optimum route, having the shorter length though having more left and right turns than the route B), the link costs decrease as the travel frequency increases when the vehicle runs the route A and the route B with the same frequency (or learns about the route A and the route B equally). Accordingly, the difference in link cost due to the length difference between the route A and the route B becomes relatively smaller after the learning. However, the node costs do not change after the learning. As a result, the total cost of the route A becomes "900" ("500" in total link cost and "400" in total node cost), and the total cost of the route B becomes "850" ("750" in total link cost and "100" in total node cost). With this reversed result, the route B is selected as the optimum route, instead of the route A that is actually the optimum route.

Therefore, a general object of the present invention is to eliminate the above disadvantages, and a more specific object of the present invention is to provide a route searching device that can detect an optimum route with higher precision, a route searching method, and a route searching program.

Means for Solving the Problems

To solve the above problems, according to one aspect of the present invention, there is provided a route searching device that detects an optimum route among possible routes to travel from a first point to a second point, on the basis of link costs that are set for a plurality of links constituting the possible routes. This route searching device comprises: a determining means that makes at least one of a determination on whether there is a restricting element for restricting the movement of a movable body at the time of moving from the road corresponding to one link to the road corresponding to another link via the connecting portion corresponding to a node to which at least two links are connected, a determination on the number of links connected to the node, a determination on the shape formed with the roads corresponding to the links connected to the connecting portion corresponding to the node, a determination on attributes of at least one of roads corresponding to the links connected to the node, and a determination on the conditions of the roads; an acquiring means that acquires a node cost that represents the difficulty of the movement from the road corresponding to the one link to the road corresponding to the another link, the node cost being in accordance with one or a combination of two or more of factors including the existence of a restricting element , the number of connected links, the shape of the connection formed with the roads corresponding to the links, the attributes of the roads, and the conditions of the roads, the factors being on the basis of the determination results of the determining means; and a route searching means that searches for the optimum route, on the basis of the link cost and the acquired node cost.
In the route searching device, the determining means further determines the direction of the movement from the road corresponding to the one link to the road corresponding to the another link, and the acquiring means acquires the node cost in accordance with a combination of two or more of the factors including the direction of the movement, on the basis of the determination results of the determining means.
In the route searching device, the acquiringmeans acquires the node cost from a plurality of predetermined node costs, in accordance with the one or the combination of two or more of the factors.
In the route searching device, the road attributes include the width of the road corresponding to the one link and the width of the road corresponding to the another link.
In the route searching device, the road attributes include the width of the road corresponding to a link other than the one link and the another link.
In the route searching device, the conditions of the road include the traffic condition of the road corresponding to the another link.
In the route searching device, the conditions of the roads include the traffic condition of the road corresponding to a link other than the one link and the another link.
The route searching device further comprises: a link learning level setting means that sets a learning level of the link in accordance with the frequency of the movable body passing through the road corresponding to the link; a node learning level setting means that sets a learning level of the node in accordance with the frequency of the movable body moving from the road corresponding to the one link to the road corresponding to the another link via the connecting portion corresponding to the node; a link cost calculating means that calculates a new link cost of the link, using the link cost set for the link and the learning level of the link; and a node cost calculating means that calculates a new node cost of the node, using the acquired node cost and the learning level of the node. In this route searching device, the route searching means searches for the optimum route, on the basis of the new link cost and the new node cost.
To solve the above problems, according to another aspect of the present invention, there is provided a route searching device that detects an optimum route among possible routes to travel from a first point to a second point, on the basis of link costs that are set for a plurality of links constituting the possible routes, and node costs that are set for a plurality of nodes to which at least two links are respectively connected. This route searching device comprises; a link learning level setting means that sets a learning level of the link in accordance with the frequency of a movable body passing through the road corresponding to the link; a node learning level setting means that sets a learning level of the node in accordance with the frequency of the movable body moving from the road corresponding to one link to the road corresponding to another link via the connecting portion corresponding to the node; a link cost calculating means that calculates a new link cost of the link, using the link cost set for the link and the learning level of the link; a node cost calculating means that calculates a new node cost of the node, using the node cost set for the node and the learning level of the node; and a route searching means that searches for the optimum route, on the basis of the new link cost and the new node cost.
In the route searching device, the change rate between the new link cost calculated by the link cost calculating means and the previous link cost is substantially the same as the change rate between the new node cost calculated by the node cost calculating means and the previous node cost.
In the route searching device, the node learning level setting means sets the learning level of the node, making a distinction between a case where the movable body moves from the road corresponding to the one link to the road corresponding to the another link via the connecting portion corresponding to the node and a case where the movable body moves from the road corresponding to the another link to the road corresponding to the one link via the connecting portion corresponding to the node.

In the route searching device, the node cost is set, with a distinction being made between a case where the movable body moves from the road corresponding to the one link to the road corresponding to the another link via the connecting portion corresponding to the node and a case where the movable body moves from the road corresponding to the another link to the road corresponding to the one link via the connecting portion corresponding to the node.

To solve the above problems, the present invention also provides a navigation apparatus that comprises the route searching device and a presentingmeans that presents information about the detected optimum route.

To solve the above problems, according to another aspect of the present invention, there is provided a route searching method for detecting an optimum route among possible routes to travel from a first point to a second point, on the basis of link costs that are set for a plurality of link constituting the possible routes. This route searching method comprises the steps of: making at least one of a determination on whether there is a restricting element for restricting the movement of a movable body at the time of moving from the road corresponding to one link to the road corresponding to another link via the connecting portion corresponding to a node to which at least two links are connected, a determination on the number of links connected to the node, a determination on the shape of the connection formed with the roads corresponding to the links connected to the connecting portion corresponding to the node, a determination on attributes of at least one of the roads corresponding to the links connected to the node, and a determination on the conditions of the roads; acquiring a node cost that represents the difficulty of the movement from the road corresponding to the one link to the road corresponding to the another link, the node cost being in accordance with one or a combination of two or more of factors including the existence of a restricting element , the number of connected links, the shape of the connection formed with the roads corresponding to the links, the attributes of the roads, and the conditions of the roads, the factors being on the basis of the determination results; and searching for the optimum route, on the basis of the link cost and the acquired node cost.

To solve the above problems, according to another aspect of the present invention, there is provided a route searching method for detecting an optimum route among possible routes from a first point to a second point, on the basis of link costs that are set for a plurality of links constituting the possible routes, and node costs that are set for a plurality of nodes to which at least two links are respectively connected. This route searching method comprises the steps of: setting a learning level of the link in accordance with the frequency of a movable body passing through the road corresponding to the link; setting a learning level of the node in accordance with the frequency of the movable body moving from the road corresponding to one link to the road corresponding to another link via the connecting portion corresponding to the node; calculating a new link cost of the link, using the link cost set for the link and the learning level of the link; calculating a new node cost of the node, using the node cost set for the node and the learning level of the node; and searching for the optimum route, on the basis of the new link cost and the new node cost.

To solve the above problems, according to another aspect of the present invention, there is provided a route searching program that is executed in a computer for detecting an optimum route among possible routes from a first point to a second point, on the basis of link costs that are set for a plurality of links constituting the possible routes. This route searching program causes the computer to function as: a determining means that makes at least one of a determination on whether there is a restricting element for restricting the movement of a movable body at the time of moving from the road corresponding to one link to the road corresponding to another link via the connecting portion corresponding to a node to which at least two links are connected, a determination on the number of links connected to the node, a determination on the shape formed with the roads corresponding to the links connected to the connecting portion corresponding to the node, a determination on attributes of at least one of the roads corresponding to the links connected to the node, and a determination on the conditions of the roads; an acquiring means that acquires a node cost that represents the difficulty of the movement from the road corresponding to the one link to the road corresponding to the another link, the node cost being in accordance with one or a combination of two or more of factors including the existence of a restricting element, the number of connected links, the shape formed with the roads corresponding to the links, the attributes of the roads, and the conditions of the roads, the factors being on the basis of the determination results of the determining means; and a route searching means that searches for the optimum route, on the basis of the link cost and the acquired node cost.

To solve the above problems, according to another aspect of the present invention, there is provided a route searching program that is executed in a computer for detecting an optimum route among possible routes from a first point to a second point, on the basis of link costs that are set for a plurality of links constituting the possible routes, and node costs that are set for a plurality of nodes to which at least two links are respectively connected. This route searching program causes the computer to function as: a link learning level setting means that sets a learning level of the link in accordance with the frequency for a movable body of passing through a road corresponding to the link; a node learning level setting means that sets a learning level of the node in accordance with the frequency of the movable body moving from the road corresponding to one link to the road corresponding to another link via the connecting portion corresponding to the node; a link cost calculating means that calculates a new link cost of the link, using the link cost set for the link and the learning level of the link; a node cost calculating means that calculates a new node cost of the node, using the node cost set for the node and the learning level of the node; and a route searching means that searches for the optimum route, on the basis of the new link cost and the new node cost.

To solve the above problems, according to another aspect of the present invention, there is provided a recording medium having the route searching program recorded on it so that the route searching program is readable by a computer.

BRIEF DESCRIPTION OF THE DRAWINGS

Fig. 1 schematically illustrates an exemplary structure of a car navigation apparatus in accordance with an embodiment of the present invention;
Fig. 2 shows an example of a connecting portion called a "roundabout";
Fig. 3 is a flowchart showing an example of a route searching operation to be performed by the system control unit 8;
Fig. 4 is a flowchart showing an example of the link cost calculating operation in step S3 of Fig. 3;
Fig. 5 is a flowchart showing an example of the node cost calculating operation in step S7 of Fig. 3;
Fig. 6 shows an example of a node cost table having node costs predetermined and registered in accordance with combinations of factors such as the shape formed with the connected roads, the attributes of the roads, the existence of restricting element s, and the moving directions;
Fig. 7 is a schematic diagram showing an exemplary case where a vehicle moves through roads corresponding to the same links via the intersection corresponding to the same node, but there are two moving directions different from each other; and
Fig. 8 schematically illustrates an exemplary structure of a communication navigation system.

Explanation of Reference Numerals

1	receiving unit
2	sensor unit
3	traffic information receiving unit
4	information memory unit
5	display unit
6	audio output unit
7	operating unit
8	system control unit
8a	present location calculating unit
8b	link cost calculating unit
8c	link learning level setting unit
8d	node cost calculating unit
8e	node learning level setting unit
8f	route searching unit
8g	route guiding unit
10	communication navigating terminal
11	communication center device
12	mobile communication network
S	car navigation apparatus
SX	communication navigating system

PREFERRED EMBODIMENTS FOR CARRYING OUT THE INVENTION

The following is a description of preferred embodiments of the present invention, with reference to the accompanying drawings. In the embodiment described below, the present invention is applied to a car navigation apparatus. This car navigation apparatus is mounted on a vehicle as an example of a movable body, and operates with the power supplied from the battery mounted in the vehicle.

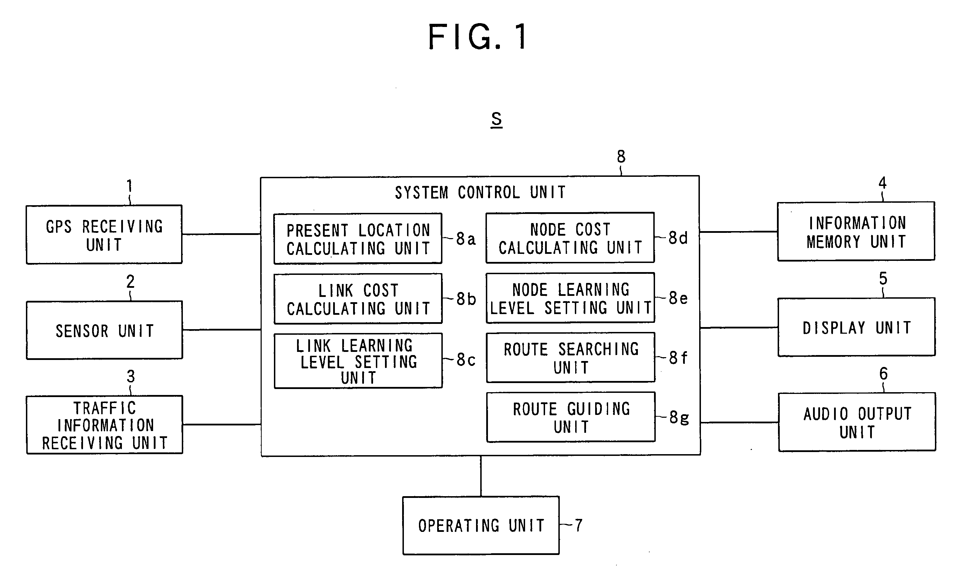

Referring first to Fig. 1, the structure and function of the car navigation apparatus in accordance with this embodiment are described.

Fig. 1 illustrates an exemplary structure of the car navigation apparatus in accordance with this embodiment.

As shown in Fig. 1, the car navigation apparatus S includes a GPS (Global Positioning System) receiving unit 1, a sensor unit 2, a traffic information receiving unit 3, an information memory unit 4, a display unit 5, an audio output unit 6, an operating unit 7, and a system control unit 8.

The GPS receiving unit 1 receives a navigational wave' signal from a GPS satellite orbiting the earth along a satellite orbit via an antenna (not shown). On the basis of the received signal, the GPS receiving unit 1 detects the present location information (the latitude and longitude), and outputs the present location information as GPS data to the system control unit 8.

The sensor unit 2 includes a speed sensor, a direction sensor (a gyro sensor), an acceleration sensor, a distance sensor, and the like. The speed sensor detects the speed of the vehicle on the basis of a vehicle speed pulse. The direction sensor detects the traveling direction of the vehicle, using the earth magnetism. The acceleration sensor detects the acceleration of the vehicle. The distance sensor detects the traveling distance of the vehicle. The sensor unit 2 outputs data (the speed data, the direction data, the acceleration data, the traveling distance data, and the like) obtained through those sensors to the system control unit 8.

The traffic information receiving unit 3 has a VICS (Vehicle Information and Communication System) receiver, for example. The traffic information receiving unit 3 receives traffic information (information about traffic conditions such as the level of traffic congestion) that is transmitted through FM multiple broad casting or optical (infrared) beacons, electric wave (quasi-microwave) beacons, and the like placed on roads (major arteries and freeways). The traffic information receiving unit 3 outputs the traffic information to the system control unit 8.

The information memory unit 4 includes a CD (Compact Disc)-ROM drive, a DVD (Digital Versatile Disc)-ROM drive, a HD (Hard Disc) drive, or the like. Under the control of the system control unit 8, the drive reads data or a program for route searching and route guiding (route introducing) that is recorded on a recording medium such as a CD-ROM, a DVD-ROM, a HD, or the like. The data or the program is then output to the system control unit 8.

Here, the data for route searching and route guiding contains map data, link data, node data, route guiding data, and data for prompting users to input an instruction or select an instruction (such as menu data).

The map data contains sets of region (mesh) data, with each set having a unique identification number allotted thereto. Each set of region data contains data such as the image of the region and the length of one side of the region (or the length obtained by reducing the length in the actual shape of land to the scale used in the map). The map data is formed continuously with those sets of region data arranged both horizontally and vertically. Each set of region data also contains information about roads, intersections, corners, branching points, junctions, traffic lights, road signs (such as a one-way sign), tollgates, toll-road interchanges, landmarks, and the names (or symbols) of obstacles such as buildings, and location information (such as latitudes and longitudes, and coordinates (X, Y) in the map data)).

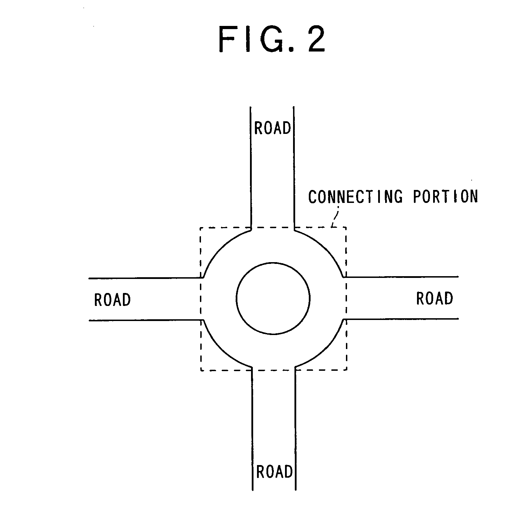

The roads in the map data are formed with links as plural line segments, and at least two links are connected with one node. This node is equivalent to a connecting portion such as an intersection, a corner, a branching point, a junction of roads, or a junction point such a's a toll-road interchange. Besides, the connecting portion may also be a "roundabout" that is often seen in Europe. A roundabout is a connecting portion of roads, as shown in the square indicated by dotted lines in Fig. 2.

Each link has a unique identification number allotted thereto (hereinafter referred to as the "link ID"), and each node has a unique identification number allotted thereto (hereinafter referred to as the "node ID").

The link data contains information about the link ID of each link, the node IDs of two nodes to which the subject link is connected, the road distance corresponding to the subject link (the length of the road), the attributes, the direction, and the like. The information is associated with each link. The attribute of a road are information about the width of the road, the number of traffic lanes, the distinction between one-way traffic and two-way traffic, existence of a right-turn lane and a left-turn lane, and the like.

A link cost as a weight determined from the distance and the attribute of the road corresponding to the traveling road is set for each link. For example, in a case where the road distance is short or the width of the road is large, the time required for traveling through the length becomes shorter, and a small link cost is set.

The node data of each node contains information about the node ID of the node, the location information (the latitude and longitude, and the coordinates (X, Y) in the map data), the link ID of the link connected to the node, and the like.

A node cost as a weight indicative of the difficulty of movement (straight-ahead driving, a left or right turn, or the like) of a vehicle from a road corresponding to one link to a road corresponding to another link via the connecting portion corresponding to the node is set for each node.

The difficulty of the vehicle movement via the connecting portion varies with: (i) the direction of the movement (straight-ahead driving, a right turn, a left turn, or the like) ; (ii) the existence of traffic regulations (obstacles such as signal lights, traffic signs (for temporary stop, for example), tollgates, traffic regulators, and buildings) for restricting movement via the connecting portion; (iii) the number of roads leading to the connecting portion (a junction of three streets, four streets, or five streets) ; (iv) the shape of the connecting portion (such as T-shaped or a cross-shaped); (v) the attributes of at least one of the roads connected with the connecting portion (such as the width of the traveling road or the number of lanes in the traveling road before a left or right turn at an intersection, the width of the traveling road or the number of lanes in the traveling road after the left or right turn at the intersection, the width of the traveling road or the number of lanes in the road the traveling road faces before the left or right turn at the intersection, the width of the traveling road or the number of lanes in the traveling road before going straight ahead the intersection, the width of the traveling road or the number of lanes in the traveling road after going straight ahead the intersection, the width of the traveling road or the number of lanes in the road the traveling road crosses when going straight ahead the intersection, the existence of a left turn lane or a right turn lane in the traveling road before the left or right turn at the intersection, thedistinctionbetweenone-waytraffic and two-way traffic with respect to the traveling road before or after passing the intersection, and the like); and (vi) the condition of at least one of the roads connected with the connecting portion (the traffic condition (such as the congestion level) of the traveling road before the left or right turn at the intersection, the traffic condition of the traveling road after the left or right turn at the intersection, the traffic condition of the road the traveling road faces before the left or right turn at the intersection, the traffic condition of the traveling road before going straight ahead the intersection, the traffic condition of the traveling road after going ahead the intersection, the traffic condition of the road the traveling road crosses when going straight ahead the intersection, and the like). The difficulty of the vehicle movement via the connecting portion also varies with combinations of two or more of the above factors (i) through (vi) (for example, the difficulty of the movement varies with the existence of traffic lights and the attribute of the road, even when the connecting portion has a cross-shaped).

With the above aspects being taken into consideration, a node cost is set suitably for each node. For example, in a case where the vehicle takes a right turn from a wide road to a narrow road via an intersection, it is difficult to make the turn, and therefore, a large node cost is set. Also, if there is not a signal light at the intersection in that case, the difficulty increases further, and therefore, an even larger node cost is set. If there is traffic congestion after the right turn, the difficulty increases further, and therefore, an even larger node cost is set.

The route guiding data contains image data, text data, and audio data to be used for a later described route guiding operation.

The data and the program for performing a route searching operation and a route guiding (route introducing) operation may be stored in a predetermined server connected to a communication network including the Internet and a mobile communication network (including wireless base stations), instead of being stored in the information memory unit 4. The data and the program are transmitted from the server when necessary, and may be output to the system control unit 8.

The display unit 5 includes a drawing unit, a buf fermemory, and a display (such as a liquid crystal display or an organic EL display). Under the control of the system control unit 8, the drawing unit downloads and draws map image data or image data relating to a route guiding operation into the buffer memory, and the map image data or the image data (such as a map, a route, the distance of the route, and a list of charges) is displayed on the screen of the display. Under the control of the system control unit 8, a menu for prompting the user to input an instruction or select an instruction is also displayed on the display.

The audio output unit 6 includes a DAC (Digital/Analog signal Converter), an amplifier, and a speaker. After the DAC D-A converts the audio data relating to the route guiding output from the system control unit 8, the amplifier amplifies the audio data, and the audio data is output as sound waves through the speaker.

The operating unit 7 includes operating buttons for receiving input instructions and selection instructions (for designating destinations, for example) from users. An instruction signal corresponding to an operating button pushed by a user is output to the system control unit 8.

The system control unit 8 includes a CPU having operating functions, a work RAM, and a ROM for storing various types of data and programs. The system control unit 8 collectively controls the entire structure of the navigation apparatus S. The CPU of the system control unit 8 reads out and executes the program for performing a route searching operation and a route guiding operation (including the route searching program of the present invention) stored in the information memory unit 4, so that the system control unit 8 functions as the present location calculating unit 8a, the link cost calculating unit 8b as the link cost calculating means, the link learning level setting unit 8c as the link learning level setting means, the node cost calculating unit 8d as the determining means, the acquiring means, and the node cost calculating means, the node learning level setting unit 8e as the node learning level setting means, the route searching unit 8f as the route searching means, and the route guiding unit 8g as the presenting means.

The present location calculating unit 8a receives the speed data, the direction data, the acceleration data, the traveling distance data, and the like that are output from the sensor unit 2. On the basis of those data, the present location calculating unit 8a calculates the present location information (the latitude and longitude, and the coordinates (X, Y) in the map data) of the vehicle. Also, on the basis of the GPS data from the GPS receiving unit 1, the present location calculating unit 8a appropriately corrects the calculated information about the present location of the vehicle. The method of calculating the information about the present location of the vehicle is a known technique, and therefore, further explanation of it is omitted herein.

The link cost calculating unit 8b obtains and sets the link cost of each of the links constituting possible routes for reaching from the present location as a first point to the destination as a second point. On the basis of the link costs, the link cost calculating unit 8b calculates the total link cost of each of the possible routes. The link cost to be set for each link is determined in accordance with the distance, the attributes, the traffic condition, and the like of the road corresponding to the link, or is calculated using parameters such as the distance, the attributes, the traffic condition, and the like of the road corresponding to the link.

The link learning level setting unit 8c sets the learning level of each link in accordance with the frequency of the vehicle passing (traveling) through the road corresponding to the link. The learning level of the link is a value that is set in proportion to the number of times the vehicle passes (travels) through the road corresponding to the link (The value of the learning level becomes larger as the number of times the vehicle passes through the road becomes larger).

Using the link cost set for the link and the link learning level set for the link, the link cost calculating unit 8b calculates a new link cost of the link. After calculating a new link cost, the link cost calculating unit 8b calculates the total link cost of the possible routes, on the basis of the new link cost. The new link cost becomes smaller, as the link learning level becomes higher. In other words, the link cost becomes smaller, as the frequency of the vehicle passing through the road corresponding to the link becomes higher.

The node cost calculating unit 8d obtains and sets the node cost of each of the nodes connecting the at least two links. On the basis of those node costs, the node cost calculating unit 8d calculates the total node cost of the possible routes.

The node cost to be set for each node is selected from predetermined node costs in accordance with one or a combination of two or more of the following factors: (i) the traveling direction of the vehicle via the connecting portion; (ii) the existence of restricting element s for restricting movement via the connecting portion; (iii) The number of roads connected with the connecting portion; (iv) the shape formed with the roads at the connecting portion; (v) the attributes of at least one of the roads connected with the connecting portion; and (vi) the condition of at least one of the roads connected with the connecting portion. Alternatively, the node cost to be set for each node is calculated and obtained, using the parameters that are set on the basis of the factors (i) through (vi).

Accordingly, the node cost calculating unit 8d determines at least one of the following factors for each node when the vehicle moves from the road corresponding to one link to the road corresponding to another link via the connecting portion corresponding to the node. The factors are the moving direction of the vehicle via the connecting portion, the existence of restricting element s for restricting the movement, the number of links connected to the node, the shape formed with the roads corresponding to the links connected to the connecting portion corresponding to the node, the attribute of the road corresponding to at least one of the links connected with the node, and the traffic condition of the road.

The node learning level setting unit 8e sets the learning level for the node in accordance with the frequency of the vehicle moving from the road corresponding to one link to the road corresponding to another link via the connecting portion corresponding to the node. The learning level of the node is a value that is set in proportion to the number of times the vehicle passes through the connecting portion corresponding to the node (in other words, the node learning level becomes higher, as the number of times becomes larger).

Using the node cost set for the node and the node learning level set for the node, the node cost calculating unit 8d calculates a new node cost for the node. After calculating a new node cost, the node cost calculating unit 8d calculates the total node cost of each of the possible routes, on the basis of the new node cost. The new node cost is smaller as the node learning level is higher. In other words, the node cost becomes smaller, as the frequency of the vehicle passing through the connecting portion corresponding to the node becomes higher.

On the basis of the link cost and the node cost, the route searching unit 8f searches the possible routes for the optimum route. For example, the route searching unit 8f calculates the total cost of each of the possible routes. The total cost is the sum of the total link cost calculated by the link cost calculating unit 8b and the total node cost calculated by the node cost calculating unit 8d. The route searching unit 8f searches for the optimum route that is the possible route having the smallest total cost among all the possible routes. It is also possible to set more than one optimum routes.

The route guiding unit 8g performs map matching to determine whether the present location is located on a road, while recognizing the present location of the vehicle calculated by the present location calculating unit 8a. Using the optimum route detected by the route searching unit 8f, the route guiding unit 8g presents the information about the optimum route (such as the route guidance (introduction) to the optimum route, and the length and the charge of the optimum route) to users. The information is displayed on the display unit 5, and is output through the audio output unit 6.

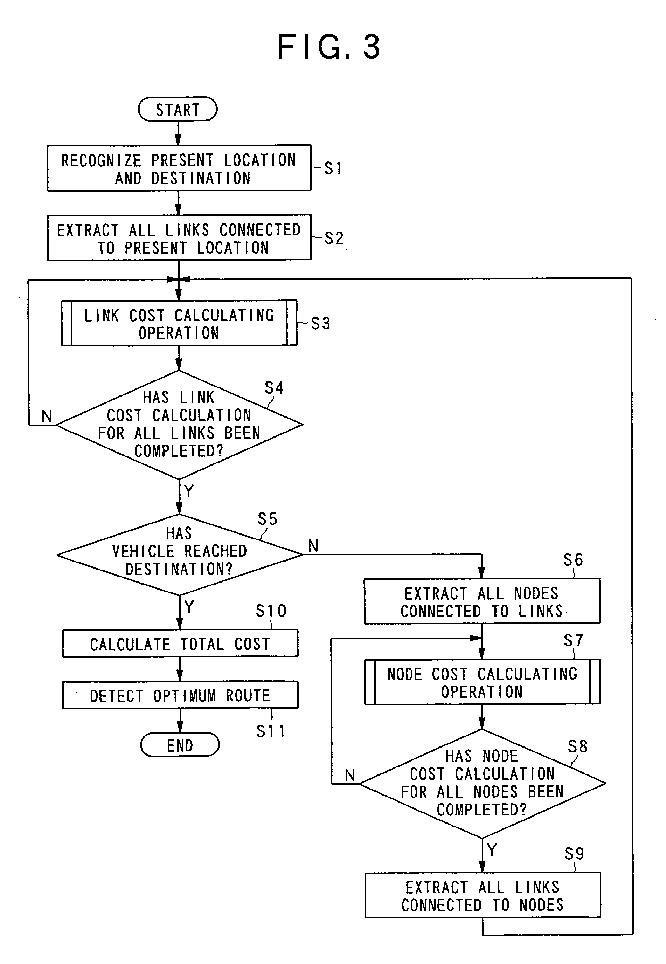

Referring now to Figs. 3 through 5, the operation of the car navigation apparatus S in accordance with this embodiment is described.

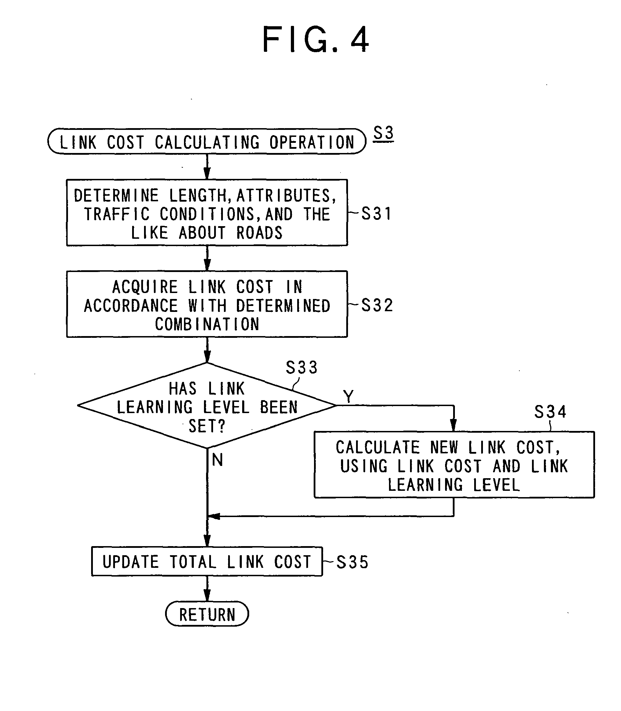

Fig. 3 is a flowchart showing an example of a route searching operation to be performed by the system control unit 8. Fig. 4 is a flowchart showing an example of the link cost calculating operation in step S3 of Fig. 3. Fig. 3 is a flowchart showing an example of the node cost calculating operation in step S7 of Fig. 3.

(Route Searching Operation)

Referring first to Fig. 3, an example of the main routine of the route searching operation is described.

When a user activates the car navigation apparatus S by operating the operating unit 7, a menu screen is shown on the display of the display unit 5. As the user operates the operating unit 7 to input a desired destination and instruct to search for a route through the menu screen, the route searching operation shown in Fig. 3 starts.

In the operation shown in Fig. 3, the system control unit 8 (the route searching unit 8f) first reads out the map data, the link data, the node data, and the like for performing a route searching operation from the information memory unit 4. The system control unit 8 then recognizes the present location of the vehicle calculated by the present location calculating unit 8a and the location of the destination that is input by the user (step S1).

The system control unit 8 (the route searching unit 8f) then extracts all the links connected to the present point (step S2), and registers the extracted links (link IDs, for example) in a link table.

The system control unit 8 (the link cost calculating unit 8b) performs a link cost calculating operation for each of the links registered in the link table (step S3). The link cost calculating operation is shown in Fig. 4, and will be described later in detail.

The system control unit 8 (the route searching unit 8f) then determines whether the link cost calculation for all the links registered in the link table has been completed (step S4). If the link cost calculation for all the links registered in the link table has not been completed ("N" in step S4), the operation returns to step S3. If the link cost calculation for all the links registered in the link table has been completed ("Y" in step S4), the operation moves on to step S5.

In step S5, the system control unit 8 (the route searching unit 8f) determines whether the vehicle has reached the destination point. If the vehicle has not reached the destination point ("N" in step S5), the operation moves on to step S6. If the vehicle has reached the destination point ("Y" in step S5), the operation moves on to step S10.

In step S6, the system control unit 8 (the route searching unit 8f) extracts all the nodes connected to the links registered in the link table, and registers the extracted nodes (node IDs, for example) in a node table.

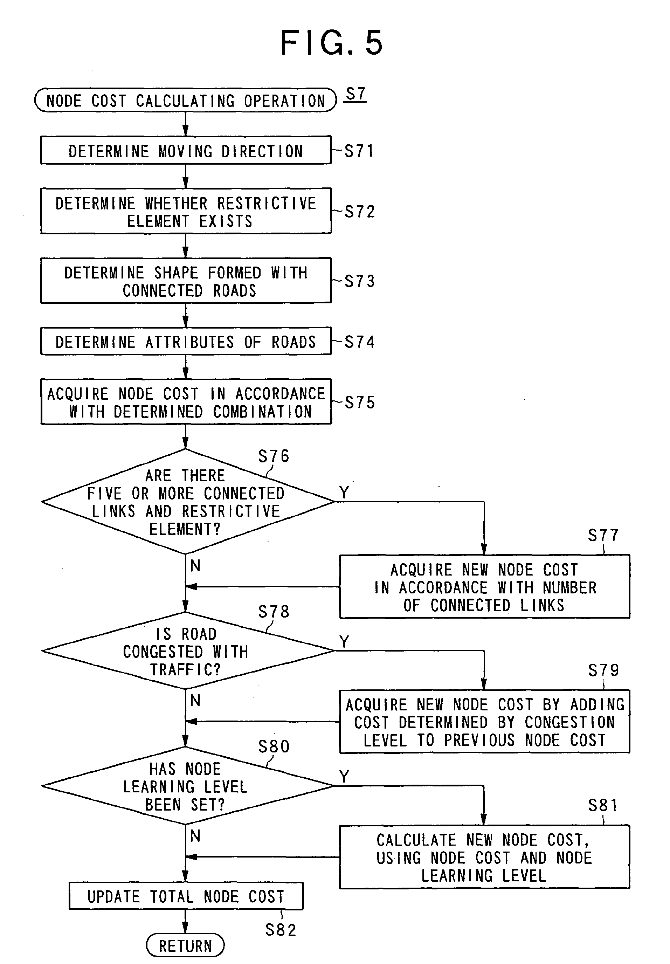

The system control unit 8 (the node cost calculating unit 8d) then performs a node cost calculating operation for the nodes registered in the node table (step S7). The node cost calculating operation is shown in Fig. 5, and will be described later in detail.

The system control unit 8 (the route searching unit 8f) then determines whether the node cost calculation for all the nodes registered in the node table has been completed (step S8) . If the node cost calculation for all the registered nodes has not been completed ("N" in step S8), the operation returns to step S7. If the node cost calculation for all the registered nodes has been completed ("Y" in step S8), the operation moves on to step S9.

In step S9, the system control unit 8 (the route searching unit 8f) extracts all the links connected to all the nodes registered in the node table (step S9), and newly registers the extracted links in the link table. The operation then returns to step S3. In step S3, the system control unit 8 (the link cost calculating unit 8b) calculates the link costs of all the newly registered links in the same manner as described above (step S4). If the vehicle is determined not to have reached the destination in step S5 ("N" in step S5), all the nodes connected to the newly added links are extracted (step S6), and are newly registered in the node table. The node costs of the newly registered nodes are calculated (step S7).

In this manner, the link cost calculation and the node cost calculation are performed until the vehicle reaches the destination point. The link costs calculated in step S3 are added up for each possible route, and the total link cost is obtained by the system control unit 8 (the route searching unit 8f). Also, the node costs calculated in step S7 are added up for each possible route, and the total node cost is obtained by the system control unit 8 (the route searching unit 8f). If there are several possible routes between the present point and the destination point, a total link cost and a total node cost are calculated for each of the possible routes.

In step S10, the system control unit 8 (the route searching unit 8f) calculates the total cost that is the sum of the total link cost and the total node cost calculated for each of the possible routes (step S10). The system control unit 8 (the route searching unit 8f) then determines the possible route having the smallest total cost to be the optimum route (step S11).

After determining the optimum route, the system control unit 8 (the route guiding unit 8g) performs a route guiding operation. More specifically, the system control unit 8 (the route guiding unit 8g) recognizes the present location of the car calculated by the present location calculating unit 8a, and presents the information about the detected optimum route (such as the guide (introduction) to the optimum route, and the length and the charge of the optimum route) to the user. The information is displayed on the display unit 5, and is output through the audio output unit 6.

In the above described operation, the total link cost is added separately from the total node cost. However, every time the link cost and the node cost of a possible route are calculated, the link cost and the node cost may be added to the total cost (in this case, the procedure of step S10 becomes unnecessary).

(Link Cost Calculating Operation)

Referring now to Fig. 4, an example of the link cost calculating operation that is a subroutine of the route searching operation is described.

In the operation shown in Fig. 4, the system control unit 8 (the link cost calculating unit 8b) selects one link from the links registered in the link table, and determines the length, the attributes, and the traffic condition of the road corresponding to the selected link, on the basis of the link data and the road traffic information from the traffic information receiving unit 3 (step S31). In accordance with the determination results, the system control unit 8 (the link cost calculating unit 8b) obtains (or stores at a certain address in the RAM) the link cost suitable for the combination of the length, the attributes, and the traffic condition of the road, from the predetermined link costs (step S32). The obtained link cost is set as the subject link (the link ID). The link cost may be obtained by assigning the parameters such as the length, the attributes, and the traffic condition of the road to a predetermined calculation formula. To calculate a link cost, it is possible to use other parameters than the above described parameters, such as the mean traveling time (the average time required for the vehicle to pass through the road corresponding to the link), the mean speed of the vehicle, and the speed limit of the road.

The system control unit 8 (the link cost calculating unit 8b) then determines whether a learning level is set for the selected link (step S33). If a learning level is set ("Y" in step S33), the system control unit 8 (the link cost calculating unit 8b) calculates a new link cost of the link, using the above link cost and the learning level of the link (obtained from the link learning level setting unit 8c) (step S34). If a link learning level is not set ("N" in step S33), the operation moves on to step S35.

This new link cost is calculated in accordance with the following calculation formula (1):

$$LC = (100 - K1 \times S) \times LC0/100 \quad \ldots \quad (1)$$

Wherein, "LC" represents the new link cost, and "LC0" represents the original link cost (the above determined link cost). Also, "S" represents the link learning level, showing the number of times the vehicle has passed the road corresponding to the subject link, for example. Further, "K1" represents a constant or a function that defines the change rate between the new link cost LC and the original link cost LC0.

The system control unit 8 (the link cost calculating unit 8b) adds the ultimately obtained or calculated link cost to the total link cost of the corresponding possible route, and stores (updates) the addition result as a new total link cost (step S35). The operation then returns to a procedure shown in Fig. 3 (or moves on to step S4). In this manner, every time a link cost is calculated, the link cost is added to the total link cost of the corresponding possible route.

The link cost calculating procedures of steps S33 and S34 involving a link learning level can be made disabled by a learning function lock or the like. In such a case, the determined link cost is added to the total link cost of the corresponding possible route, and the addition result is stored (updated) as a new total link cost in step S35.

(Node Cost Calculating Operation)

Referring now to Fig. 5 or the like, an example of the node cost calculating operation that is a subroutine of the route searching operation is described. In the following description, in a case where the vehicle moves from the road corresponding to one link to the road corresponding to another link via an intersection such as a T-shaped junction, a right angle crossroad, or a junction of five streets, the "one link" will be referred to as the "approach link", and the "another link" will be referred to as the "exit link". In a case where the vehicle travels straight ahead from the road corresponding to the approach link to the road corresponding to the exit link via a right angle crossroad, the link corresponding to the road that runs at right angles to the roads corresponding to the approach link and the exit link (or a road corresponding to a link other than the approach link and the exit link, with the vehicle intersecting the road) will be referred to as the intersecting link. In a case where a vehicle takes a left or right turn from the road corresponding to the approach link to the road corresponding to the exit link via a right angle crossroad, the road the vehicle faces before taking the left or right turn at the intersection will be referred to as the opposed link.

In the operation shown in Fig. 5, the system control unit 8 (the node cost calculating unit 8d) first selects one node from the nodes registered in the node table. The system control unit 8 (the node cost calculating unit 8d) determines the moving direction of the vehicle moving from the road corresponding to the approach link to the road corresponding to the exit link via the connecting portion corresponding to the selected node (step S71). The determination result is stored. In the determination, the angle of the approach link with respect to the exit link is calculated on the basis of the directions of the respective roads corresponding to the approach link and the exit link. If the angle is within a predetermined angle range for a right turn, the movement is determined to be a right turn. If the angle is within a predetermined angle range for a left turn, the movement is determined to be a left turn. If the angle is within a predetermined angle range for straight-ahead driving, the movement is determined to be straight-ahead driving. The angle ranges for a left turn and a right turn may be set to several levels, so that the angle of each turn may be distinguished in accordance with the actual turn the vehicle is to make whether it is to left or right.

The system control unit 8 (the node cost calculating unit 8d) then determines whether restricting element s (such as signal lights) exist for restricting movement via the connecting portion corresponding to the selected node (step S72), and stores the determination result. This determination on whether such restricting element s exist can be made on the basis of the map data.

The system control unit 8 (the node cost calculating unit 8d) then determines the shape (such as a T-shaped or a cross-shaped) formed with the roads connected to the connecting portion corresponding to the selected node (step S73), and stores the determination result. The determination on the connection shape can be made on the basis of the angle of the approach link with respect to another link connected to the selected node.

The system control unit 8 (the node cost calculating unit 8d) then determines the attributes (such as a large width (10 m or more), a normal width (5 m or more to less than 10 m), or a small width (less than 5 m)) of the roads corresponding to the approach link and the exit link among the roads connected with the connecting portion corresponding to the selected node (step S74). The determination results are stored. As described above, checking may be performed to determine the number of lanes in the traveling road, instead of the widths of the roads corresponding to the approach link and the exit link.

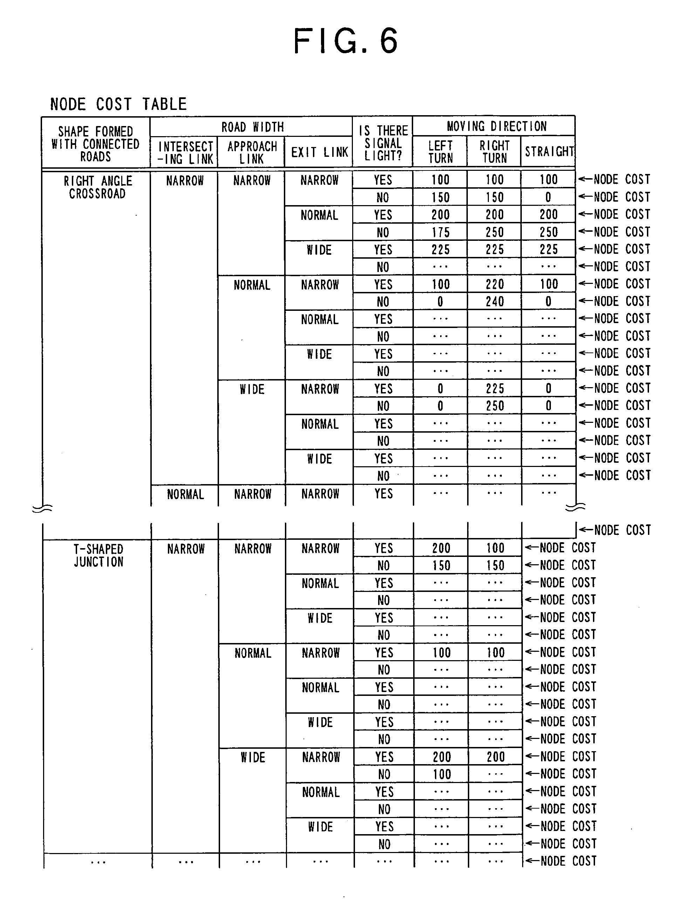

On the basis of the determination results of steps S71 through S74, the system control unit 8 (the node cost calculating unit 8d) acquires (or stores at a certain address in the RAM, for example) a node cost suitable for the combination of the determined shape formed with the connected roads, the attribute of the road, the existence of the restricting element s, and the moving direction, from the predetermined node costs (such as the node costs registered in a node cost table as shown in Fig. 6) (step S75). Alternatively, the node cost may be acquired by assigning parameters such as the determined shape formed with the connected road, the attribute of the road, the existence of restricting element s, and the moving direction, to a predetermined calculation formula. It is not necessary to make all the determinations in steps S71 through S74, but at least one of the determinations should be made.

Fig. 6 shows an example of the node cost table in which predetermined node costs that vary with the combinations of factors such as the shape formed with the connected roads, the attributes of roads, the existence of restricting elements, and moving directions are registered. Like the data for performing a route searching operation, the node cost table is recorded on a CD-ROM, a DVD-ROM, a HD, or the like in advance.

As shown in Fig. 6, the node costs vary with the combinations of factors such as the shape (such as T-shaped or cross-shaped) formed with the connected roads, the attributes (such as the widths) of roads, the existence of restricting element s (such as traffic lights), and moving directions (such as left turns, right turns, and straight-ahead driving).

The node costs shown in Fig. 6 are determined, with basic principles (including empirical rules) being taken into consideration. In a case where the connecting portion corresponding to the subject node is a right angle crossroad with signal lights and the width of the road corresponding to the approach link is large, for example, the period of the green light is long, and the signal waiting time for each left turn is short. Accordingly, the difficulty of turning left is small. In this case, however, the amount of traffic is large, and the signal waiting time for each right turn is long. Accordingly, the difficulty of turning right is large. If the width of the road corresponding to the exit link is small in such a case, a right-turn lane or a signal light for right turns might not exist. As a result, the difficulty of turning right becomes even larger.

In a case where the connecting portion corresponding to the subject node is a right angle crossroad with signal lights, the width of the road corresponding to the approach link is small, and the width of the road corresponding to the exit link is large, the signal waiting times for both left turns and right turns are long. Therefore, the difficulty of turning left and the difficulty of turning right are both large. If there is not a signal light at the right angle crossroad, the difficulty of turning left and the difficulty of turning right are larger.

In a case where the connecting portion corresponding to the subject node is a right angle crossroad with signal lights, the width of the road corresponding to the intersecting link is large, and the width of the road corresponding to the exit link is small, the signal waiting time for going straight ahead is long. In such a case, the difficulty of moving straight ahead is large. In the opposite case to that, the signal waiting time for going straight ahead is short, and the difficulty of moving straight ahead is small. In a case where the connecting portion corresponding to the subject node is a right angle crossroad without a signal light, the width of the road corresponding to the intersecting link is large, and the width of the road corresponding to the exit link is small, the difficulty of going straight ahead (intersecting) is very large.

In a case where the connecting portion corresponding to the subject node is a T-shaped intersection with signal lights, the difficulty of turning right and the difficulty of turning left are the same (compared with a case of a right angle crossroad with signal lights, the difficulty of turning right at a T-shaped intersection is smaller). If the width of the road corresponding to the exit link is large in such a case, the signal waiting times for both right and left turns are long, and the difficulty of turning right and the difficulty of turning left are large. If there is not a signal light at the T-shaped intersection, the difficulty of turning right is very large.

Although examples of the basic principles have been described above, other various factors may be taken into consideration when a node cost is determined. The basic principles are also determined in accordance with the traffic rules or the like in each country, as some countries have different traffic rules from one another. For example, since car drivers keep to the left side of the road in the United Kingdom, as in Japan, the above described basic principles also apply in the United Kingdom. Meanwhile, car drivers keep to the right side of the road in countries like Germany and France. Therefore, the difficulty of turning right and the difficulty of turning left based on the above described principles are reversed in those countries. Further, if the traffic rules allow right turns at a red light, as in the United States, the difference between the difficulty of turning right and the difficulty of turning left may be made larger.

In the node cost table shown in Fig. 6, there are three moving directions (turning left, turning right, and driving straight ahead). However, moving directions are not limited to those directions. There may be four or more directions set in accordance with the angles at which the vehicle makes turns, and node costs may be set on the basis of those directions. Also, signal lights have been described as the restricting element s, but it is possible to distinctly set node costs in accordance with other restricting element s such as traffic signs (a stop sign, for example), tollgates, traffic regulators, and building. Also, there are three types of width (small, normal, and large) as an attribute of each road in the above description. However, it is also possible to distinctly set node costs on the basis of four types of road width. Further, it is possible to distinctly set node costs on the basis of the number of lanes in each road. In the above description, there are two shapes formed with connected roads (T-shaped and right angle crossroads). However, it is possible to distinctly set node costs on the basis of three or more shapes (including Y-shaped intersections, junctions of five streets, and the like). If the node costs that are set in this manner are registered in the node cost table, the determining procedures of steps S71 through S74 should be changed or more determining procedures should be added accordingly (for example, determinations on whether a traffic sign (such as a stop sign) exists or a tollgate exists should be added).

The system control unit 8 (the node cost calculating unit 8d) then determines whether the number of links connected to the selected node is five or more and there is a restricting element (such as a signal light) (step S76). If those conditions are satisfied ("Y" in step S76), the system control unit 8 (the node cost calculating unit 8d) calculates and acquires a new node cost (by the formula of $NC = (n-3) \times NC0$, with "n" being the number of connected links, "NC0" being the original node cost, "NC" being the new node cost) suitable for the number of connected links, on the basis of the node cost acquired in step S75 (step S77). As the number of connected roads corresponding to the links (a junction of five streets, a junction of six streets, ...) increases, the signal waiting time becomes longer, and the difficulty of movement becomes larger. The number of preset node costs is increased accordingly.

The system control unit 8 (the node cost calculating unit 8d) then obtains the traffic information as to the roads from the traffic information receiving unit 3, and determines the traffic condition of the road corresponding to the exit link connected to the selected node (step S78). For example, the system control unit 8 (the node cost calculating unit 8d) determines whether there is a traffic jam. If there is a traffic jam ("Y" in step S78), the system control unit 8 (the node cost calculating unit 8d) adds a cost generated by the traffic jam to the node cost acquired in step S77, so as to obtain a new node cost (step S79). In a case where there is not congestion information on the road corresponding to the approach link (taking into consideration the fact that congestion information is not provided for all the roads and the roads connected to a road that is provided with congestion information and is actually congested with traffic are often also congested with traffic even though congestion information is not provided for such roads) and the vehicle is to take a left or right turn into a road congested with traffic (the road corresponding to the exit link), the chances are that the road before the turn (the road corresponding to the approach link) is also congested with traffic, and the difficulty of a left or right turn increases. In view of this, the node cost is increased accordingly. In a case where the vehicle is to turn right from a road congested with traffic, the signal waiting time before a right turn is longer (the blue light might be skipped several times), and the difficulty of a right turn increases. In view of this, the node cost is increased accordingly. If a node cost is to be set for a toll-road interchange, the node cost is increased in accordance with the congestion level of the toll road ahead (the road corresponding to the exit link).

In this manner, the node cost acquired in step S79 is set for the subject node (node ID).

Although the traffic condition (congestion level) of the road corresponding to the exit link is checked in step S78, the present invention is not limited to that. For example, the traffic condition (congestion level) of the road corresponding to the opposed link may be checked. In a case where the road corresponding to the opposed link is congested with traffic, the difficulty of a right turn increases, and the node cost is increased accordingly.

It is also possible to check the traffic condition (congestion level) of the road corresponding to the exit link in steps S71 through S74, and the node costs are set, with the traffic conditions (congestion levels) of the roads being incorporated into the node cost table.

The system control unit 8 (the node cost calculating unit 8d) then determines whether a learning level is set for the selected node (step S80). If a learning level is set ("Y" in step S80), the system control unit 8 (the node cost calculating unit 8d) calculates a new node cost for the node, using the node cost acquired and set in step S79 and the learning level of the node (obtained from the node learning setting unit 8e) (step S81). Even in a case where the vehicle is to move from the road corresponding to the approach link to the road corresponding to the exit link via the connecting portion corresponding to the node, the difficulty of the movement decreases as the driver becomes accustomed to the movement if the frequency of the movement (the number of times the vehicle moves in the same way) is large. The node cost is reduced accordingly. On the other hand, if a learning level is not set for the node ("N" in step S80), the operation moves on to step S82.

This new node cost is calculated by the following calculation formula (2):
$$NC = (100-K2(S1+S2)/2) \times NC0/100 \quad ... \quad (2)$$

Here, "NC" represents the new node cost, and "NCO" represents the original node cost (the node cost acquired in step S79). Further, "(S1+S2) /2" represents the learning level of the node, which is a value obtained by dividing the sum of the learning level S1 of the approach link (the number of times the vehicle has passed through the road corresponding to the approach link) and the learning level S2 of the exit link (the number of times the vehicle has passed through the road corresponding to the exit link) by "2". Accordingly, the above described link learning level set for each link can be used. Alternatively, a node learning level is not determined by the learning level S1 of the approach link and the learning level S2 of the exit link, but the number of times the vehicle passes through the connecting portion corresponding to the node may be counted and set as the node learning level.

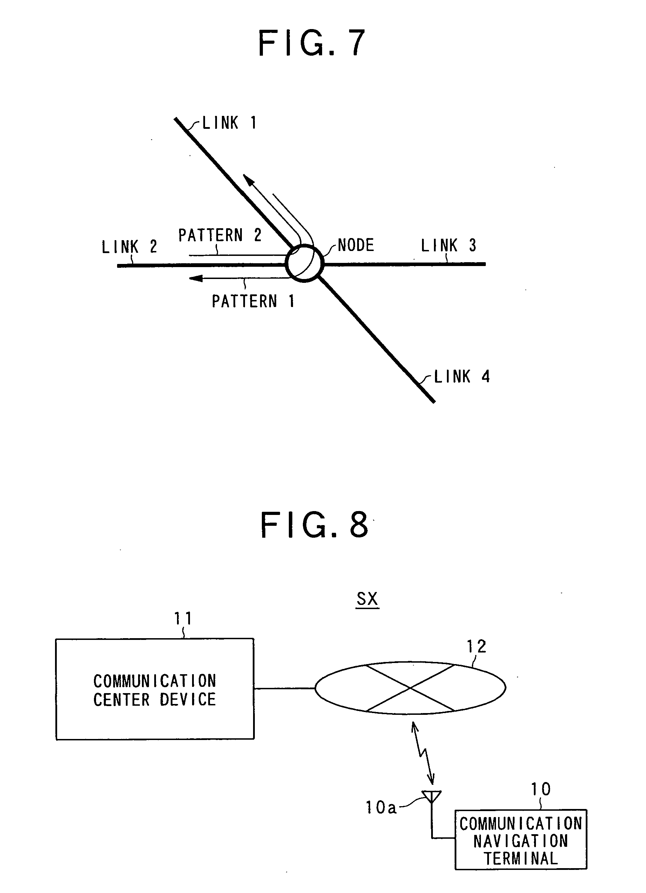

In a case where the vehicle passes through the road corresponding to the same link and the intersection corresponding to the same node, the difficulty of the vehicle movement varies with the directions of the movement, as indicated by pattern 1 and pattern 2 shown in Fig. 7. In the case of the pattern 1, the vehicle turns right at the intersection. In the case of the pattern 2, the vehicle turns left at the intersection. Therefore, the node cost acquired for the pattern 1 in step S75 should be different from the node cost acquired for the pattern 2 in step S75.

However, the node learning level ((S1+S2)/2) in the calculation formula (2) does not vary between the pattern 1 and the pattern 2. More specifically, a distinction is not made between a case where the vehicle moves from the road corresponding to one link to the road corresponding to another link via the connecting portion corresponding to a node and a case where the vehicle moves from the road corresponding to the other link to the road corresponding to the one link via the connecting portion corresponding to the node. To counter this problem, the node learning level in the case of the pattern 1 is set as "S12", and the node learning level in the case of the pattern 2 is set as "S21". The node learning level setting unit 8e should preferably be designed to count the number of times the vehicle passes through the connecting portion corresponding to the node, with respect to the node learning level S12 and the node learning level S21 separately from each other. In this manner, different node learning levels can be distinctly set for the pattern 1 and the pattern 2.

In a case where node learning levels are distinctly set for the pattern 1 and the pattern 2 separately from each other as described above, a new node cost for the pattern 1 is calculated by the following calculation formula (3), and a new node cost for the pattern 2 is calculated by the following calculation formula (4), so as to set different node costs for the pattern 1 and the pattern 2.
$$NC = (100-K2 \times S12) \times NC0/100 \quad ... \quad (3)$$

$$NC = (100-K2 \times S21) \times NC0/100 \quad ... \quad (4)$$

In each of the above formulas (2) through (4), "K2" represents the constant or the function that defines the change rate (ratio) between the new node cost NC and the previous node cost NC0, and the value K2 is preferably the same as the change rate K1 (in the formula (1)) between the new link cost LC and the previous link cost LC0. Accordingly, when the vehicle travels through a route, each link cost and each node cost decrease at the same rate (ratio) in accordance with the travel frequency. Thus, the inconvenience mentioned as the problems to be solved by the present invention can be avoided. More specifically, in a case where the vehicle travels through the route A and the route B (described in the Problems to be Solved by the Invention) with the same frequency, the total cost of the route A is "700" ("500" in total link cost and "200" in total node cost), for example, and the total cost of the route B is "800" ("750" in total link cost and "50" in total node cost). The total cost of the routeAdoes not change after the learning, and is constantly selected as the optimum route. As long as the total cost of the route A does not change after the learning and is constantly selected as the optimum route in a case where the vehicle travels through the route A and the route B in the same frequency, "K2" in each of the formulas (2) through (4) is not necessarily the same as "K1" in the formula (1), but may be in the neighborhood of "K1" (there may be a constant difference between K1 and K2).

The system control unit 8 (the node cost calculating unit 8d) adds the ultimately acquired or calculated node cost to the total node cost of the corresponding possible route (the possible route extending through the connecting portion corresponding to the node), and stores (updates) the addition result as a new total node cost (step S82). In this manner, every time a node cost is calculated, the calculated node cost is added to the total node cost of the corresponding possible route.

The node cost calculating procedures involving a node learning level in steps S80 and S81 can be disabled by a learning function lock or the like. In such a case, the node cost acquired and set in step S79 is added to the total node cost of the corresponding possible route, and the addition result is stored (updated) as a new total node cost in step S82.

As described above, in accordance with this embodiment, when a vehicle moves from the road corresponding to one link to the road corresponding to another link via the connecting portion corresponding to a node, checking is performed to make at least one of the following determinations: a determination on the direction of the movement of the vehicle via the connecting portion, a determination on whether there is a restricting element for restricting the movement, a determination on the number of links connected to the node, a determination on the shape formed with the connected roads corresponding to the links connected to the connecting portion corresponding to the node, a determination on the attribute of the road corresponding to at least one of the links connected to the node, and a determination on the conditions of the roads. A node cost is then obtained in accordance with one or a combination of two or more of the determination results. On the basis of the node cost and the link cost, an optimum route is searched for. With this arrangement, the total cost of each route becomes more accurate, and the optimum route can be detected with higher precision. Thus, a route through which users can easily travel by car can be determined.

Furthermore, a concept of learning level is applied not only for each link cost but also for each node cost. Accordingly, the link cost and the node cost exhibit the same change rate in accordance with the travel frequency of the vehicle. In this manner, the problem that the total costs of the routes with the same travel frequency are reversed after the learning, and the optimum route can be detected with high precision.

In the above described embodiment, each node cost is acquired in accordance with the results of determinations on the direction of the vehicle movement via the connecting portion corresponding to the node, whether there is a restricting element for restricting the movement via the connecting portion, and the like. For example, information about the waiting time for a restricting element (such as a signal light), the switching cycles of the restricting element , and the like, may be contained in the data for performing a route searching operation. For each node having such a restricting element , the waiting time and the switching cycles of the restricting element (such as a signal light) are checked, and the node cost is acquired in accordance with the check results. Also, the changes caused in the amount of traffic and the switching cycles of a signal light by the time at which a route searching operation starts or the time at which a route guiding operation starts are taken into consideration, and each node cost may be dynamically set.

(Other Embodiment 1)

Although the route searching device and method of the present invention are implemented in the car navigation apparatus S mounted on a vehicle in the above described embodiment, but are not limited to these, the route searching device and method of the present invention may be implemented in a communication navigation system or the like.

Fig. 8 schematically illustrates an exemplary structure of a communication navigation system. As shown in Fig. 8, the communication navigation system SX includes a communication navigation terminal 10 that is mounted on a vehicle, and a communication center device (a fixed server device) 11 to which the communication navigation terminal 10 is connected via an antenna 10a and a mobile communication network (including wireless base stations) 12.

The communication navigation terminal 10 includes a GPS (Global Positioning System) receiving unit 1, a sensor unit 2, a traffic information receiving unit 3, a display unit 5, an audio output unit 6, and an operating unit 7 that are the same as those in the car navigation apparatus S. The communication navigation terminal 10 further includes a communication unit or the like for performing communications with the communication center device 11 via the mobile communication network 12, and a terminal control unit (not shown) that collectively controls those components and controls information exchange with the communication center device 11.

Meanwhile, the communication center device 11 includes a communication unit that performs communications with the communication navigation terminal 10 via the mobile communication network 12, a memory unit that stores data and programs for performing route search operations and route guiding (introducing) operations stored (recorded) in an information memory unit 4 as in the car navigation apparatus S, and a system control unit that substantially has the same functions as those (including the present location calculating unit 8a, the link cost calculating unit 8b, the link learning level setting unit 8c, the node cost calculating unit 8d, the node learning level setting unit 8e, the route searching unit 8f, the route during unit 8g, and the like) of the system control unit 8 in the car navigation apparatus S.

In this structure, the communication center device 11 transmits (provides) the minimum map data or the like to the communication navigation terminal 10, in response to a request from the navigation terminal 10 via the mobile communication network 12. The communication center device 11 also performs a route searching operation that is the same as the operation illustrated in Figs. 3 through 5, and performs a route guiding operation (the route guiding unit 8g presents the information about the route to the user through the communication navigation terminal 10, using the optimum route detected by the route searching unit 8f).

With this communication navigation system SX, the same effects as those achieved with the car navigation apparatus S can be achieved.

(Other Embodiment 2)

Although the present invention is applied to the car navigation system S and the communication navigation system SX involving a vehicle as a moving (movable) body in the above described embodiments, the present invention is not limited to those embodiments. As described in the following, the present invention can be applied to many other structures, and can achieve the same effects as those achieved with the above described embodiments.

For example, the present invention may be applied to a mobile terminal (such as a portable telephone device, a PDA (Personal Digital Assistant), a PHS (Personal Handy-phone System), or a laptop PC (Personal Computer) that is carried by a pedestrian or a bicycle rider (or mounted on a bicycle), with the pedestrian (that may be an animal) or the bicycle being the moving (movable) body. In such a case, the "roads" corresponding to links include pedestrian roads (sidewalks), and the "road conditions" include the congestion level of each sidewalk.

The present invention may also be applied to a navigation apparatus that is mounted on a ship or an aircraft, with the ship or the aircraft being the moving (movable) body. In such a case, the "roads" corresponding to links include ship routes or air routes, and the "connecting portion" corresponding to each node is equivalent to a harbor or an airport.

The present invention may also be applied to a mobile terminal that is carried by a train passenger, with the passenger being the moving (movable) body. In such a case, the "roads" corresponding to links are equivalent to train lines (such as the Yamanote Line), the "connecting portion" corresponding to a node is equivalent to a station with transfers of trains, and the "road conditions" include the congestion level of each train. In this case, the train map data as the map data is stored in the mobile terminal of the train passenger or in a server device connected to the mobile terminal via a mobile communication network. Further, information such as train timetables is stored.

In this case, the mobile terminal of the train passenger makes at least one of the following determinations when the train passenger moves (transfers) from the "line" corresponding to one link to the "line" corresponding to another link via the "station with transfers" corresponding to a node to which at least two links are respectively connected. The determinations include a determination on whether there is a restricting element (such as stairs or a ticket gate for restricting the movement, a determination on the number of links connected to the node, a determination on the shape formed with the "lines" corresponding to the links connected to the connecting portion corresponding to the node, a determination on the attribute (such as train intervals) of the "line" corresponding to at least one of the links connected to the node, and a determination on the conditions (such as the congestion level) of the "line" (a determination on the time required for a transfer may be included herein).

On the basis of the determination results, the mobile terminal of the train passenger acquires a node cost in accordance with one or a combination of two or more of the following factors: the existence of a restricting element , the number of connected links, the shape of the connected point of the road corresponding to the link, the attribute of the road, and the conditions of the road. The mobile terminal then detects the optimum route from the possible routes to travel from the first point (Tokyo Station, for example) to the second point (Shibuya Station, for example), on the basis of the link cost (determined by the distance of the line, the attribute of the line, and the like, as in the foregoing embodiments) and the acquired node cost (here, the setting of the link and node learning levels, and the calculations of a new link cost and a new node cost on the basis of the link and node learning levels, are also taken into consideration). In this case, a node cost table that is the same as the table shown in Fig. 6 is also prepared. In the node cost table, node costs predetermined in accordance with combinations of the factors such as the shape formed with the connected lines, the attributes of each line, and the existence of a restricting element , are registered.

It should be noted that the present invention is not limited to the embodiments specifically disclosed above, but other variations and modifications may be made without departing from the scope of the present invention.

The above described embodiments are merely examples, and any structure that is technically the same as that claimed in the present invention and achieves the same effects as those claimed is within the technical scope of the present invention.

It should be noted that the entire contents of Japanese Priority Patent Application No. 2004-138718, filed on May 7, 2004, including the specification, the claims, the drawings, and the abstract, are incorporated herein by reference.

**Claims**

1.  A route searching device that detects an optimum route among possible routes from a first point to a second point, on the basis of link costs that are set for a plurality of links constituting the possible routes, comprising:

a determining means that makes at least one of a determination on whether there is a restricting element for restricting movement of a movable body at the time of moving from a road corresponding to one link to a road corresponding to another link via a connecting portion corresponding to a node to which at least two links are connected, a determination on the number of links connected to the node, a determination on a shape formed with the roads corresponding to the links connected to the connecting portion corresponding to the node, a determination on attributes of at least one of roads corresponding to the links connected to the node, and a determination on the conditions of the roads;

an acquiring means that acquires a node cost that represents difficulty of the movement from the road corresponding to the one link to the road corresponding to the another link, the node cost being in accordance with one or a combination of two or more of factors including the existence of a restricting element , the number of connected links, the shape formed with the roads corresponding to the links, the attributes of the roads, and the conditions of the roads, the factors being on the basis of determination results of the determining means; and a route searching means that searches for the optimum route, on the basis of the link cost and the acquired node cost.

2. The route searching device according to claim 1, wherein:

the determining means further determines a direction of the movement from the road corresponding to the one link to the road corresponding to the another link; and

the acquiring means acquires the node cost in accordance with a combination of two or more of the factors including the direction of the movement, on the basis of the determination results of the determining means.

3. The route searching device according to claim 1 or 2, wherein the acquiring means acquires the node cost from a plurality of predetermined node costs, in accordance with the one or the combination of two or more of the factors.

4. The route searching device according to claim 1 or 2, wherein the road attributes include a width of the road corresponding to the one link and a width of the road corresponding to the another link.

5. The route searching device according to claim 1 or 2, wherein the road attribute include a width of a road corresponding to a link other than the one link and the another link.

6. The route searching device according to claim 1 or 2, wherein the conditions of the roads include a traffic condition of the road corresponding to the another link.

7. The route searching device as claimed in claim 1 or 2, wherein the conditions of the roads include a traffic condition of a road corresponding to a link other than the one link and the another link.

8. The route searching device as claimed in claim 1 or 2, further comprising:

a link learning level setting means that sets a learning level of the link in accordance with frequency of the movable body passing through the road corresponding to the link;

a node learning level setting means that sets a learning level of the node in accordance with frequency of the movable body moving from the road corresponding to the one link to the road corresponding to the another link via the connecting portion corresponding to the node;

a link cost calculating means that calculates a new link cost of the link, using the link cost set for the link and the learning level of the link; and

a node cost calculating means that calculates a new node cost of the node, using the acquired node cost and the learning level of the node,

wherein the route searching means searches for the optimum route, on the basis of the new link cost and the new node cost.

9. A route searching device that detects an optimum route among possible routes from a first point to a second point, on the basis of link costs that are set for a plurality of links constituting the possible routes, and node costs that are set for a plurality of nodes to which at least two links are respectively connected,
the route searching device comprising:

a link learning level setting means that sets a learning level of the link in accordance with frequency of a movable body passing through a road corresponding to the link;

a node learning level setting means that sets a learning level of the node in accordance with frequency of the movable body moving from a road corresponding to one link to a road corresponding to another link via a connecting portion corresponding to the node;

a link cost calculating means that calculates a new link cost of the link, using the link cost set for the link and the learning level of the link;

a node cost calculating means that calculates a new node cost of the node, using the node cost set for the node and the learning level of the node; and

a route searching means that searches for the optimum route, on the basis of the new link cost and the new node cost.

10. The route searching device according to claim 9, wherein the change rate between the new link cost calculated by the link cost calculating means and the previous link cost is substantially the same as the change rate between the new node cost calculated by the node cost calculating means and the previous node cost.

11. The route searching device according to claim 9 or 10, wherein the node learning level setting means sets the learning level of the node, making a distinction between a case where the movable body moves from the road corresponding to the one link to the road corresponding to the another link via the connecting portion corresponding to the node and a case where the movable body moves from the road corresponding to the another link to the road corresponding to the one link via the connecting portion corresponding to the node.

12. The route searching device according to claim 9 or 10, wherein the node cost is set, with a distinction being made between a case where the movable body moves from the road corresponding to the one link to the road corresponding to the another link via the connecting portion corresponding to the node and a case where the movable body moves from the road corresponding to the another link to the road corresponding to the one link via the connecting portion corresponding to the node.

13. A navigation apparatus comprising:

the route searching device according to one of claims 1, 2, 9, and 10; and

a presenting means that presents information about the detected optimum route.

14. A route searching method for detecting an optimum route among possible routes from a first point to a second point, on the basis of link costs that are set for a plurality of link constituting the possible routes, the route searching method comprising the steps of:

making at least one of a determination on whether there is a restricting element for restricting movement of a movable body at the time of moving from a road corresponding to one link to a road corresponding to another link via a connecting portion corresponding to a node to which at least two links are connected, a determination on the number of links connected to the node, a determination on a shape formed with the roads corresponding to the links connected to the connecting portion corresponding to the node, a determination on attributes of at least one of the roads corresponding to the links connected to the node, and a determination on the conditions of the roads;

acquiring a node cost that represents difficulty of the movement from the road corresponding to the one link to the road corresponding to the another link, the node cost being in accordance with one or a combination of two or more of factors including the existence of a restricting element , the number of connected links, the shape formed with the roads corresponding to the links, the attributes of the roads, and the conditions of the roads, the factors being on the basis of the determination results; and

searching for the optimum route, on the basis of the link cost and the acquired node cost.

15. A route searching method for detecting an optimum route among possible routes from a first point to a second point, on the basis of link costs that are set for a plurality of links constituting the possible routes, and node costs that are set for a plurality of nodes to which at least two links are respectively connected, the route searching method comprising the steps of:

setting a learning level of the link in accordance with frequency of a movable body passing through a road corresponding to the link;

setting a learning level of the node in accordance with frequency of the movable body moving from a road corresponding to one link to a road corresponding to another link via a connecting portion corresponding to the node;

calculating a new link cost of the link, using the link cost set for the link and the learning level of the link;

calculating a new node cost of the node, using the node cost set for the node and the learning level of the node; and

searching for the optimum route, on the basis of the new link cost and the new node cost.

16. A route searching program that is executed in a computer for detecting an optimum route among possible routes from a first point to a second point, on the basis of link costs that are set for a plurality of links constituting the possible routes,

the route searching program causing the computer to function as:

a determining means that makes at least one of a determination on whether there is a restricting element for restricting movement of a movable body at the time of moving from a road corresponding to one link to a road corresponding to another link via a connecting portion corresponding to a node to which at least two links are connected, a determination on the number of links connected to the node, a determination on a shape formed with the roads corresponding to the links connected to the connecting portion corresponding to the node, a determination on attributes of at least one of the roads corresponding to the links connected to the node, and a determination on the conditions of the roads;

an acquiring means that acquires a node cost that represents difficulty of the movement from the road corresponding to the one link to the road corresponding to the another link, the node cost being in accordance with one or a combination of two or more of factors including the existence of a restricting element , the number of connected links, the shape formed with the roads corresponding to the links, the attributes of the roads, and the conditions of the roads, the factors being on the basis of determination results of the determining means; and

a route searching means that searches for the optimum route, on the basis of the link cost and the acquired node cost.

17. A route searching program that is executed in a computer for detecting an optimum route among possible routes from a first point to a second point, on the basis of link costs that are set for a plurality of links constituting the possible routes, and node costs that are set for a plurality of nodes to which at least two links are respectively connected,

the route searching program causing the computer to function as:

a link learning level setting means that sets a learning level of the link in accordance with frequency of a movable body passing through a road corresponding to the link;

a node learning level setting means that sets a learning level of the node in accordance with frequency of the movable body moving from a road corresponding to one link to a road corresponding to another link via a connecting portion corresponding to the node;

a link cost calculating means that calculates a new link cost of the link, using the link cost set for the link and the learning level of the link;

a node cost calculating means that calculates a new node cost of the node, using the node cost set for the node and the learning level of the node; and

a route searching means that searches for the optimum route, on the basis of the new link cost and the new node cost.

18. A recording medium that holds the route searching program according to claim 16 or 17,

the route searching program being computer-readably recorded on the recording medium.

# FIG. 1

<u>S</u>

| | | | |
|---|---|---|---|
| GPS RECEIVING UNIT — 1 | | | INFORMATION MEMORY UNIT — 4 |

SYSTEM CONTROL UNIT — 8

- PRESENT LOCATION CALCULATING UNIT ~8a
- NODE COST CALCULATING UNIT ~8d
- LINK COST CALCULATING UNIT ~8b
- NODE LEARNING LEVEL SETTING UNIT ~8e
- LINK LEARNING LEVEL SETTING UNIT ~8c
- ROUTE SEARCHING UNIT ~8f
- ROUTE GUIDING UNIT ~8g

GPS RECEIVING UNIT — 1

SENSOR UNIT — 2

TRAFFIC INFORMATION RECEIVING UNIT — 3

INFORMATION MEMORY UNIT — 4

DISPLAY UNIT — 5

AUDIO OUTPUT UNIT — 6

OPERATING UNIT ~7

EP 1 752 738 A1

# FIG. 2

# FIG. 3

START

RECOGNIZE PRESENT LOCATION AND DESTINATION ⎯S1

EXTRACT ALL LINKS CONNECTED TO PRESENT LOCATION ⎯S2

LINK COST CALCULATING OPERATION ⎯S3

S4
HAS LINK COST CALCULATION FOR ALL LINKS BEEN COMPLETED?
N

Y

S5
HAS VEHICLE REACHED DESTINATION?
N

Y

CALCULATE TOTAL COST ⎯S10

DETECT OPTIMUM ROUTE

END ⎯S11

EXTRACT ALL NODES CONNECTED TO LINKS ⎯S6

NODE COST CALCULATING OPERATION ⎯S7

S8
HAS NODE COST CALCULATION FOR ALL NODES BEEN COMPLETED?
N

Y

EXTRACT ALL LINKS CONNECTED TO NODES ⎯S9

# FIG. 4

( LINK COST CALCULATING OPERATION ) <u>S3</u>

DETERMINE LENGTH, ATTRIBUTES,
TRAFFIC CONDITIONS, AND THE —S31
LIKE ABOUT ROADS

ACQUIRE LINK COST IN
ACCORDANCE WITH DETERMINED —S32
COMBINATION

S33
HAS LINK
LEARNING LEVEL BEEN          Y
SET?
N

S34
CALCULATE NEW LINK COST,
USING LINK COST AND LINK
LEARNING LEVEL

UPDATE TOTAL LINK COST —S35

( RETURN )

# FIG. 5

```
( NODE COST CALCULATING OPERATION )  S7
                    │
        ┌───────────────────────────┐
        │  DETERMINE MOVING DIRECTION │─ S71
        └───────────────────────────┘
                    │
        ┌───────────────────────────┐
        │  DETERMINE WHETHER RESTRICTIVE │─ S72
        │       ELEMENT EXISTS          │
        └───────────────────────────┘
                    │
        ┌───────────────────────────┐
        │  DETERMINE SHAPE FORMED WITH  │─ S73
        │       CONNECTED ROADS         │
        └───────────────────────────┘
                    │
        ┌───────────────────────────┐
        │ DETERMINE ATTRIBUTES OF ROADS │─ S74
        └───────────────────────────┘
                    │
        ┌───────────────────────────┐
        │ ACQUIRE NODE COST IN ACCORDANCE │─ S75
        │   WITH DETERMINED COMBINATION   │
        └───────────────────────────┘
```

**S76** ARE THERE FIVE OR MORE CONNECTED LINKS AND RESTRICTIVE ELEMENT? — Y →

**S77** ACQUIRE NEW NODE COST IN ACCORDANCE WITH NUMBER OF CONNECTED LINKS

N ↓

**S78** IS ROAD CONGESTED WITH TRAFFIC? — Y →

**S79** ACQUIRE NEW NODE COST BY ADDING COST DETERMINED BY CONGESTION LEVEL TO PREVIOUS NODE COST

N ↓

**S80** HAS NODE LEARNING LEVEL BEEN SET? — Y →

**S81** CALCULATE NEW NODE COST, USING NODE COST AND NODE LEARNING LEVEL

N ↓

UPDATE TOTAL NODE COST

**S82**

( RETURN )

# FIG. 6

NODE COST TABLE

| SHAPE FORMED WITH CONNECTED ROADS | ROAD WIDTH | | | IS THERE SIGNAL LIGHT? | MOVING DIRECTION | | | |
|---|---|---|---|---|---|---|---|---|
| | INTERSECT -ING LINK | APPROACH LINK | EXIT LINK | | LEFT TURN | RIGHT TURN | STRAIGHT | |
| RIGHT ANGLE CROSSROAD | NARROW | NARROW | NARROW | YES | 100 | 100 | 100 | ←NODE COST |
| | | | | NO | 150 | 150 | 0 | ←NODE COST |
| | | | NORMAL | YES | 200 | 200 | 200 | ←NODE COST |
| | | | | NO | 175 | 250 | 250 | ←NODE COST |
| | | | WIDE | YES | 225 | 225 | 225 | ←NODE COST |
| | | | | NO | ... | ... | ... | ←NODE COST |
| | | NORMAL | NARROW | YES | 100 | 220 | 100 | ←NODE COST |
| | | | | NO | 0 | 240 | 0 | ←NODE COST |
| | | | NORMAL | YES | ... | ... | ... | ←NODE COST |
| | | | | NO | ... | ... | ... | ←NODE COST |
| | | | WIDE | YES | ... | ... | ... | ←NODE COST |
| | | | | NO | ... | ... | ... | ←NODE COST |
| | | WIDE | NARROW | YES | 0 | 225 | 0 | ←NODE COST |
| | | | | NO | 0 | 250 | 0 | ←NODE COST |
| | | | NORMAL | YES | ... | ... | ... | ←NODE COST |
| | | | | NO | ... | ... | ... | ←NODE COST |
| | | | WIDE | YES | ... | ... | ... | ←NODE COST |
| | | | | NO | ... | ... | ... | ←NODE COST |
| | NORMAL | NARROW | NARROW | YES | ... | ... | ... | |
| | | | | | | | | ←NODE COST |
| T-SHAPED JUNCTION | NARROW | NARROW | NARROW | YES | 200 | 100 | | ←NODE COST |
| | | | | NO | 150 | 150 | | ←NODE COST |
| | | | NORMAL | YES | ... | ... | | ←NODE COST |
| | | | | NO | ... | ... | | ←NODE COST |
| | | | WIDE | YES | ... | ... | | ←NODE COST |
| | | | | NO | ... | ... | | ←NODE COST |
| | | NORMAL | NARROW | YES | 100 | 100 | | ←NODE COST |
| | | | | NO | ... | ... | | ←NODE COST |
| | | | NORMAL | YES | ... | ... | | ←NODE COST |
| | | | | NO | ... | ... | | ←NODE COST |
| | | | WIDE | YES | ... | ... | | ←NODE COST |
| | | | | NO | ... | ... | | ←NODE COST |
| | | WIDE | NARROW | YES | 200 | 200 | | ←NODE COST |
| | | | | NO | 100 | ... | | ←NODE COST |
| | | | NORMAL | YES | ... | ... | | ←NODE COST |
| | | | | NO | ... | ... | | ←NODE COST |
| | | | WIDE | YES | ... | ... | | ←NODE COST |
| | | | | NO | ... | ... | | ←NODE COST |
| ... | ... | ... | ... | ... | ... | ... | | ←NODE COST |

# FIG. 7

LINK 1

LINK 2     PATTERN 2     NODE     LINK 3

PATTERN 1

LINK 4

# FIG. 8

SX

11

COMMUNICATION
CENTER DEVICE

12

10a

10

COMMUNICATION
NAVIGATION
TERMINAL

### INTERNATIONAL SEARCH REPORT

| International application No. |
|---|
| PCT/JP2005/007825 |

**A. CLASSIFICATION OF SUBJECT MATTER**
Int.Cl⁷ G01C21/34, G08G1/0969

According to International Patent Classification (IPC) or to both national classification and IPC

**B. FIELDS SEARCHED**

Minimum documentation searched (classification system followed by classification symbols)
Int.Cl⁷ G01C21/00-21/36, G08G1/00-9/02, G09B23/00-29/14, G06F17/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-028659 A (Denso Corp.), 29 January, 2003 (29.01.03), | 1-7,13,14, 16,18 |
| Y | Par. Nos. [0027], [0033], [0035], [0036], | 8 |
| A | [0054], [0071] (Family: none) | 10 |
| Y | JP 2002-181574 A (Pioneer Electronic Corp.), 26 June, 2002 (26.06.02), | 8,9,11,12, 15,17 |
| A | Par. Nos. [0016], [0018] to [0021], [0031] to [0032] & US 5877708 A          & US 6448908 B1 & EP 724135 A2          & EP 724135 A3 & EP 724135 B1 | 10 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 July, 2005 (19.07.05) | 02 August, 2005 (02.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/007825 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-287968 A  (Aisin AW Co., Ltd.),<br>04 November, 1997 (04.11.97), | 8,9,11,12,<br>15,17 |
| A | Par. Nos. [0022], [0025], [0030]<br>& US 6098015 A        & EP 803705 A2<br>& EP 803705 B1 | 10 |
| A | JP 10-239080 A  (Alpine Electronics, Inc.),<br>11 September, 1998 (11.09.98),<br>& US 6351707 B1 | 1-18 |
| A | JP 7-294267 A  (Pioneer Electronic Corp.),<br>10 November, 1995 (10.11.95),<br>& US 5657231 A        & EP 679867 A1 | 1-18 |

Form PCT/ISA/210 (continuation of second sheet) (January 2004)

# INTERNATIONAL SEARCH REPORT

| International application No. |
|---|
| PCT/JP2005/007825 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

```
    The inventions of 1-8, 14, and 16 relate to an invention "determining
restriction etc. present when a mobile body moves from a link, connected to
a node, to another link, and based on the result of the determination, obtaining
cost of the node to search the most appropriate route."
    The inventions of claims 9-12, 15, and 17 relate to an invention "setting,
according to frequency of passing through a link, the degree of leaning of
the link and a node, calculating new link cost and node cost by using the
degree of leaning, and searching the most appropriate route based on the new
link cost and node cost."
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐   The additional search fees were accompanied by the applicant's protest.

                        ☒   No protest accompanied the payment of additional search fees.

Form PCT/ISA/210 (continuation of first sheet (2)) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000329574 A
- JP 2003057054 A
- JP 2004138718 A